# EUROPEAN PATENT APPLICATION

(11) **EP 4 768 788 A1**
(43) Date of publication of application: **01.07.2026**
(21) Application number: 24913491.7
(22) Date of filing: 02.12.2024
(51) Int. Cl.: F24C 7/08, F24C 15/04, G03B 17/55, G03B 30/00, H04N 23/57, H04N 7/18, G03B 17/56

(54) **COOKING APPARATUS**

(30) Priority: 28.12.2023 KR 20230195402; 29.02.2024 KR 20240029814
(71) Applicant: Samsung Electronics Co., Ltd., Suwon-si, Gyeonggi-do 16677 (KR)
(72) Inventor: JEONG, Heesoo, Suwon-si, Gyeonggi-do 16677 (KR); KIM, Sihwan, Suwon-si, Gyeonggi-do 16677 (KR); KIM, Woojoo, Suwon-si, Gyeonggi-do 16677 (KR); CHEONG, Youngmin, Suwon-si, Gyeonggi-do 16677 (KR)
(74) Representative: Gulde & Partner
(86) International application number: PCT/KR2024/019437
(87) International publication number: WO 2025/143598

(57) **Abstract**

A cooking apparatus includes a main body including a cooking chamber, a door mounted on the main body to open or close the cooking chamber and including an inner glass and an outer glass, a camera bracket attached to the outer glass between the outer glass and the inner glass, a camera holder detachably mounted to the camera bracket, a camera mounted on the camera holder to capture an inside of the cooking chamber, a first polarizing member on the outer glass, the first polarizing member configured to transmit light oscillating in a first direction, and a second polarizing member on a side of the camera facing the cooking chamber, the second polarizing member configured to absorb or reflect the light oscillating in the first direction transmitted by the first polarizing member and reflected by the inner glass.

## Description

### [Technical Field]

The disclosure relates to a cooking apparatus including a camera for capturing an interior of a cooking chamber.

### [Background Art]

A cooking apparatus is a device for cooking food, including a cooking chamber and a heating device for heating the cooking chamber. Cooking apparatuses may include ovens that use electric heaters or gas as heating devices, microwaves that use magnetrons that generate microwaves as heating devices, gas ranges, electric ranges, oven ranges, gas grills, electric grills, and the like.

An oven range is an appliance that cooks food by transferring heat directly to the food or by heating the interior of the cooking chamber through a heating source that generates heat, such as a heater. An oven range may include an oven arranged in a main body and a cooktop including at least one heating element arranged on a top of the main body.

The cooking apparatus may be provided with a camera for capturing the interior of the cooking chamber. The camera may recognize a type and condition of the food, and the cooking apparatus may be controlled accordingly.

Since the interior of the cooking chamber may be heated to high temperatures and the camera is susceptible to heat, it is necessary to provide a structure to prevent the camera from being damaged or malfunctioning due to high temperatures.

### [Disclosure]

### [Technical Problem]

An embodiment of the present disclosure provides a cooking apparatus capable of protecting a camera from heat.

An embodiment of the present disclosure provides a cooking apparatus capable of protecting a camera from water.

An embodiment of the present disclosure provides a cooking apparatus that allows for easy maintenance and/or repair of a camera.

An embodiment of the present disclosure provides a cooking apparatus that allows for unobstructed viewing of the inside of a cooking chamber through a door and reduces damage to an image captured by a camera.

Technical tasks to be achieved in this document are not limited to the technical tasks mentioned above, and other technical tasks not mentioned will be clearly understood by those skilled in the art from the description below.

### [Technical Solution]

According to an embodiment of the present disclosure, a cooking apparatus includes a main body including a cooking chamber, a door mounted on the main body to open or close the cooking chamber and including an inner glass and an outer glass, a camera bracket attached to the outer glass between the outer glass and the inner glass, a camera holder detachably mounted to the camera bracket, a camera mounted on the camera holder to capture an inside of the cooking chamber, a first polarizing member on the outer glass, the first polarizing member configured to transmit light oscillating in a first direction from among light incident on the first polarizing member, and a second polarizing member on a side of the camera facing the cooking chamber, the second polarizing member configured to absorb or reflect the light oscillating in the first direction transmitted by the first polarizing member and reflected by the inner glass.

According to an embodiment of the present disclosure, a cooking apparatus includes a main body including a first cooking section and a second cooking section positioned below the first cooking section and having a cooking chamber, a door mountable on the main body to open or close the cooking chamber, the door including an inner glass and an outer glass, a camera disposed within the door to monitor an inside of the cooking chamber, a camera bracket attached to the outer glass between the outer glass and the inner glass, and a camera holder on which the camera is mounted, the camera holder being detachably mountable to the camera bracket. The camera is configured to be enclosed by the outer glass and the camera holder when the camera holder is mounted on the camera bracket.

### [Description of Drawings]

FIG. 1 shows a cooking apparatus according to an embodiment of the present disclosure.
FIG. 2 shows a side cross-sectional view of the cooking apparatus according to an embodiment of the present disclosure.
FIG. 3 shows an exploded view of a door according to an embodiment of the present disclosure.
FIG. 4 shows a camera device disassembled from an outer body of the door according to an embodiment of the present disclosure.
FIG. 5 shows the camera device disassembled according to an embodiment of the present disclosure.
FIG. 6 shows a camera holder of the camera device according to an embodiment of the present disclosure secured to a camera bracket.
FIG. 7 shows a state in which the camera holder of the camera device according to an embodiment of the present disclosure is detachable from the camera bracket.
FIG. 8 is an enlarged view of portion A shown in FIG. 2.
FIG. 9 is an enlarged view of portion B shown in FIG. 3.
FIG. 10 is an enlarged view of a portion of the door in which a camera of the cooking apparatus according to an embodiment of the present disclosure is disposed.
FIG. 11 shows a cooking apparatus according to an embodiment of the present disclosure.

### [Modes of the Invention]

Various embodiments of the disclosure and terms used herein are not intended to limit the technical features described herein to specific embodiments, and should be understood to include various modifications, equivalents, or substitutions of the corresponding embodiments.

In describing of the drawings, similar reference numerals may be used for similar or related elements.

The singular form of a noun corresponding to an item may include one or more of the items unless clearly indicated otherwise in a related context.

In the disclosure, phrases, such as "A or B", "at least one of A and B", "at least one of A or B", "A, B or C", "at least one of A, B and C", and "at least one of A, B, or C" may include any one or all possible combinations of the items listed together in the corresponding phrase among the phrases.

As used herein, the term "and/or" includes any and all combinations of one or more of the associated listed items.

The term "part", "portion", "module" or "member" may be implemented in hardware or software. In some embodiments, a plurality of "parts", "portions", "modules" or "members" may be implemented as a single element, or a single "part", "portion", "module" or "member" may include a plurality of elements.

Terms such as "1st", "2nd", "primary", or "secondary" may be used simply to distinguish an element from other elements, without limiting the element in other aspects (e.g., importance or order).

When an element (e.g., a first element) is referred to as being "(functionally or communicatively) coupled" or "connected" to another element (e.g., a second element), the first element may be connected to the second element, directly (e.g., wired), wirelessly, or through a third element.

It will be understood that when the terms "includes", "comprises", "including", and/or "comprising" are used in the disclosure, they specify the presence of the specified features, figures, steps, operations, components, members, or combinations thereof, but do not preclude the presence or addition of one or more other features, figures, steps, operations, components, members, or combinations thereof.

When a given element is referred to as being "connected to", "coupled to", "supported by" or "in contact with" another element, it is to be understood that it may be directly or indirectly connected to, coupled to, supported by, or in contact with the other element. When a given element is indirectly connected to, coupled to, supported by, or in contact with another element, it is to be understood that it may be connected to, coupled to, supported by, or in contact with the other element through a third element.

It will also be understood that when an element is referred to as being "on" another element, it may be directly on the other element or intervening elements may also be present.

The terms "front", "rear", "left", "right", "top", "bottom", and the like used in the following description are defined with reference to the drawings, but the shape and position of each element are not limited by the above terms. For example, a front side may be defined as a +X side and a rear side may be defined as a -X side. For example, with reference to the drawings, a right side may be defined as a +Y side and a left side may be defined as a -Y side. For example, with reference to the drawings, an upper side may be defined as a +Z side and a lower side may be defined as a -Z side.

Hereinafter, various embodiments according to the present disclosure will be described in detail below with reference to the accompanying drawings.

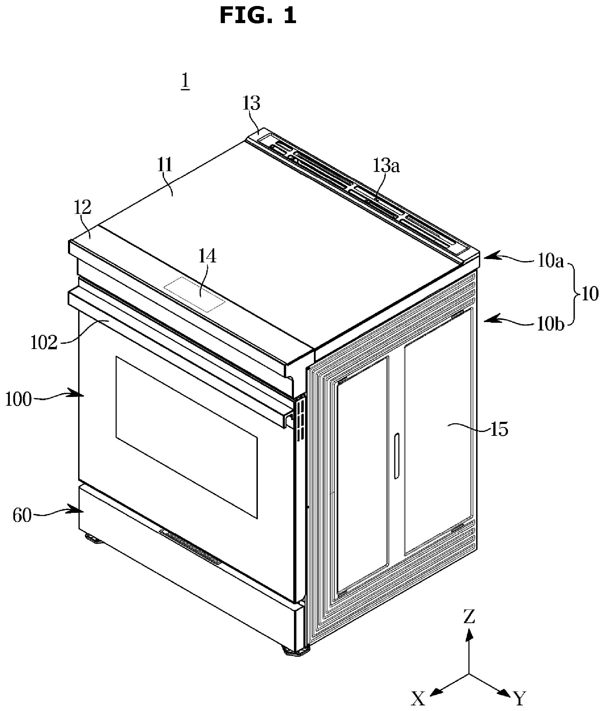

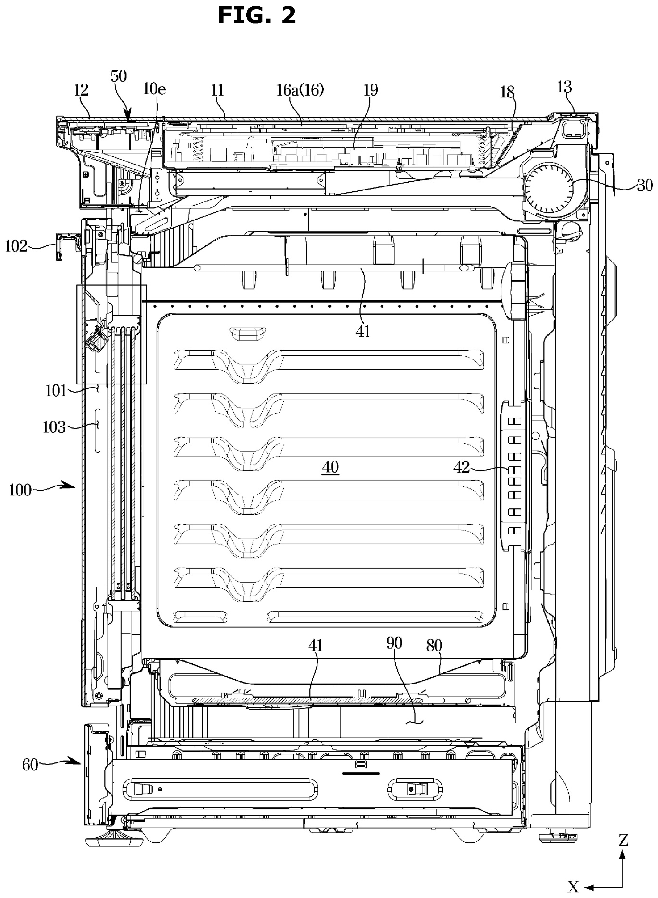

FIG. 1 shows a cooking apparatus according to an embodiment of the present disclosure. FIG. 2 shows a cross-section of the cooking apparatus according to an embodiment of the present disclosure.

Referring to FIGS. 1 and 2, a cooking apparatus 1 according to an embodiment of the present disclosure may include a main body 10.

The main body 10 may include a first cooking section 10a and a second cooking section 10b positioned below the first cooking section 10b. For example, the first cooking section 10a may be a range, and the second cooking section 10b may be an oven. The main body 10 may further include a drawer 60 provided below the second cooking section 10b, having the form of a drawer, and being slidably in and out. The drawer 60 may be provided to store food or cooking utensils.

The main body 10 of the cooking apparatus 1 may also include only one of the first cooking section 10a, the second cooking section 10b and the drawer 60.

The main body 10 may include a side panel 15. The side panels 15 may form sides of the cooking apparatus 1. The side panels 15 may form a space within which a cooking chamber housing 80 is disposed.

The first cooking section 10a may include a cooktop 10a. The cooktop 10a may be configured to cook food. The cooktop 10a may be configured to heat food. The cooktop 10a may be disposed on an upper portion of the main body 10. The cooktop 10a may be disposed above the cooking chamber housing 80.

The cooktop 10a may include top plates 11 and 12. The top plates 11 and 12 may be disposed on the upper portion of the main body 10. The top plates 11 and 12 may include a cooking plate 11 and a control plate 12. In the drawings, the cooking plate 11 and the control plate 12 are shown separately, but the cooking plate 11 and the control plate 12 may be provided as a single unit.

The cooktop 10a may include the cooking plate 11 on which a cooking vessel may be placed. The cooking plate 11 may be disposed on the upper portion of the main body 10. For example, the cooking plate 11 may include an approximately flat plate shape. For example, the cooking plate 11 may include tempered glass, such as ceramic glass. The cooking plate 11 may be a first top plate.

The cooktop 10a may include the control plate 12. The control plate 12 may be disposed on the upper portion of the main body 10. For example, the control plate 12 may include a substantially flat plate shape. For example, the control plate 12 may include tempered glass, such as ceramic glass. The control plate 12 may be arranged to be transparent.

The control plate 12 may cover the upper portion of the main body 10. The control plate 12 may be arranged horizontally with the cooking plate 11. For example, the control plate 12 may be positioned at the same height as the cooking plate 11. The control plate 12 may be configured to allow an image from a display module 50 to be displayed. For example, the control plate 12 may be configured as an area through which at least a portion of the display module 50, to be described later, is transmitted and displayed to a user. The control plate 12 may also be referred to as a control panel. The control plate 12 may be referred to as a second top plate.

The cooking apparatus 1 may further include a user interface 14. The user interface 14 may display the operation of the cooking apparatus 1 and/or various information, and may receive input from a user. For example, the user interface 14 may be configured to display information about the first cooking section 10a and the second cooking section 10b, or receive user input about the first cooking section 10a and the second cooking section 10b. The user interface 14 may be located on the control plate 12.

The cooktop 10a may include the display module 50. The display module 50 may be configured to implement the user interface 14. The display module 50 may be arranged to correspond to the user interface 14. For example, the display module 50 may include a printed board assembly (PBA) including a display panel, a switching element, an integrated circuit element, and the like, and a printed circuit board (PCB) on which they are mounted. The display module 50 may be a display assembly. The display module 50 may be disposed below the control plate 12.

The display module 50 may be arranged on a front side of a heating member 16. The display module 50 may include a display.

The cooktop 10a may include a heating member 16. The heating member 16 may be disposed below the cooking plate 11 to heat the cooking plate 11 and a cooking vessel placed on the cooking plate 11. For example, the heating member 16 may include a coil 16a. A current that varies in magnitude over time may be applied to the coil 16a. When the current is applied to the coil 16a, a magnetic field may be formed around the coil 16a. As the current applied to the coil 16a varies, the magnetic field formed around the coil 16a may also vary. An eddy current may flow from the surface of the cooking vessel in contact with the cooking plate 11 due to the change in the magnetic field, thereby heating the cooking vessel.

In the drawings, the cooktop 10a is shown as being induction, an electric cooktop, but the present disclosure is not limited thereto. The type of the cooktop 10a is not limited as long as the cooktop 10a is capable of heating a cooking vessel. For example, the cooktop 10a may be provided as a gas range, a highlight, a hybrid, or an oven.

The cooktop 10a may include a cooktop housing 18. The cooktop housing 18 may have a heating member control board 19 and the heating member 16, which are disposed therein. The cooktop housing 18 may accommodate the heating member control board 19 and the heating member 16. The cooktop housing 18 may support the heating member control board 19.

The heating member control board 19 may be configured to supply drive current to the heating member 16. The heating member control board 19 may be configured to implement circuitry for operating the heating member 16. The heating member control board 19 may include various elements and/or circuitry for supplying drive current to the heating member 16. The heating member control board 19 may be a heating member drive board and/or a first board 19.

The cooktop 10a may include an outlet panel 13. The outlet panel 13 may be disposed on the upper portion of the main body 10. For example, the outlet panel 13 may cover the upper portion of the main body 10. The outlet panel 13 may be disposed on a rear side of the main body 10. For example, the outlet panel 13 may be arranged on a rear side of the cooking plate 11. The outlet panel 13 may be arranged horizontally with the cooking plate 11. For example, the outlet panel 13 may be positioned flush with the cooking plate 11.

An outlet 13a may be formed in the outlet panel 13. Air inside the main body 10 may flow to the outside through the outlet 13a. For example, air inside the main body 10 may flow upwardly to the outside of the main body 10 through the outlet 13a.

The cooking apparatus may include a cooking chamber 40. The main body 10 may have the cooking chamber 40. For example, the second cooking section 10b may have the cooking chamber 40 forming a cooking space.

The cooking apparatus 1 may include a door 100. The door 100 may be rotatably coupled to the main body 10. The door 100 may rotate in a direction covering the cooking chamber 40. For example, the door 100 may be coupled to the lower portion of the main body 10 to open or close the cooking chamber 40. The door 100 may form a door channel 101 through which air flows therein. The door 100 may include a door handle 102 formed to protrude toward the front of the cooking apparatus 1.

The door 100 may include a door opening 103 formed to communicate the door channel 101 inside the door 100 with the outside. The door opening 103 may be formed in a top, side, and/or bottom of the door 100. The door openings 103 may be formed at predetermined intervals. The door openings 103 may allow air to enter or exit an inside of the door 100 and circulate air within the door channel 101. Heat inside the door 100 may be discharged to an outside of the door 100 through the door opening 103. The door opening 103 may communicate between the inside of the door 100 and the outside of the door 100.

The cooking apparatus 1 may include an electrical chamber 90 disposed adjacent to the cooking chamber 40, having a space independent of the cooking chamber 40, and in which various electrical components, such as circuit boards, are disposed. For example, the electrical chamber 90 may be disposed below the cooking chamber housing 80.

The cooking apparatus 1 may include the second cooking section 10b. The second cooking section 10b may include a heating source 41 configured to heat the interior of the cooking chamber 40. The heating source 41 may include a heater. For example, the heating source 41 may be provided in a plurality, and one of the plurality of heating sources 41 may be disposed on the upper portion of the cooking chamber 40 to provide heat into the cooking chamber 40. In addition, another of the plurality of heating sources 41 may be disposed on the lower portion of the cooking chamber 40 to provide heat into the cooking chamber 40.

In response to the cooking chamber 40 being closed by the door 100 after the food is received in the cooking chamber 40, the heating source 41 of the second cooking section 10b may generate heat, and the generated heat may be transferred to the cooking chamber 40 to allow the food to be cooked by dry heat.

The air inside the cooking chamber 40 may be circulated. For example, during cooking of food, the air inside the cooking chamber 40 may be circulated. The hot air inside the cooking chamber 40 may be circulated to heat the food received in the cooking chamber 40 in more than one direction.

The cooking apparatus 1 may include a cooling fan 30. For example, the cooktop 10a may include the cooling fan 30. The cooling fan 30 may be disposed on the upper portion of the cooking chamber housing 80 to discharge air drawn into the main body 10 to the outside via an inlet 10e. The cooling fan 30 may be disposed on a rear side of the main body 10. The cooling fan 30 may include a centrifugal fan or turbo fan that draws in air in an axial direction and discharges the drawn air in a radial direction.

The cooking apparatus 1 may include a circulation fan 42. The circulation fan 42 may circulate air within the cooking chamber 40 to enable the food in the cooking chamber 40 to be evenly heated. The circulation fan 42 may be disposed on the rear side of the cooking chamber 40. For example, the circulation fan 42 may be coupled to a rear wall of the cooking chamber housing 80.

Air flowing into the inside of the main body 10 through the inlet 10e may flow rearwardly along a guide flow path. Air flowing into the inside of the main body 10 through the inlet 10e may cool the display module 50, the heating member 16, the control board 19, and the like.

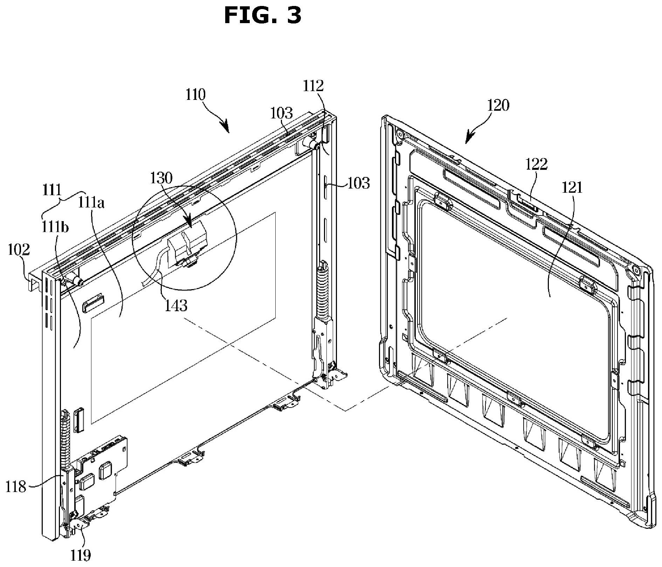

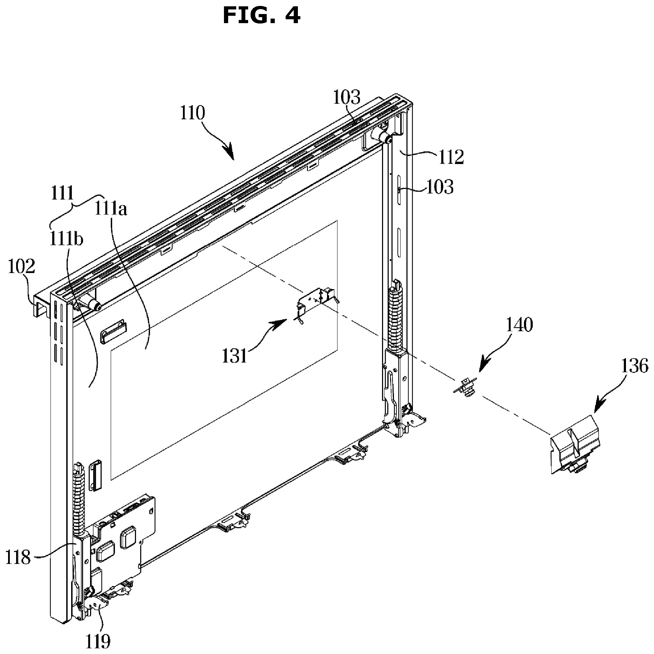

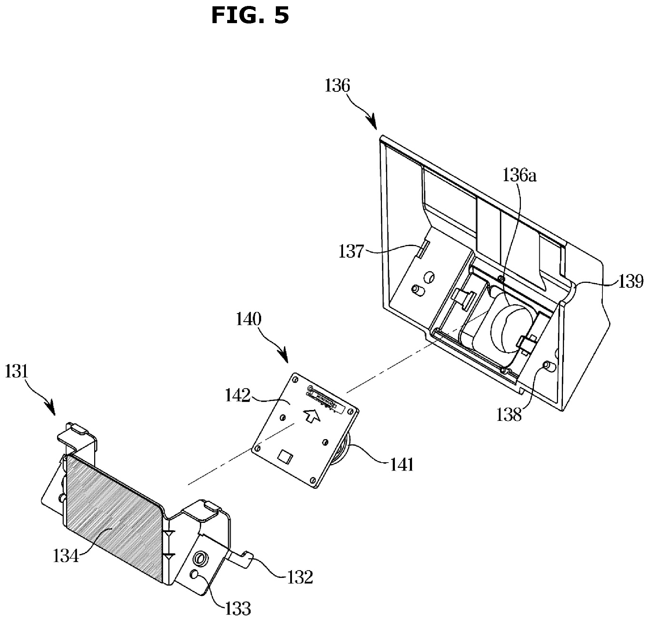

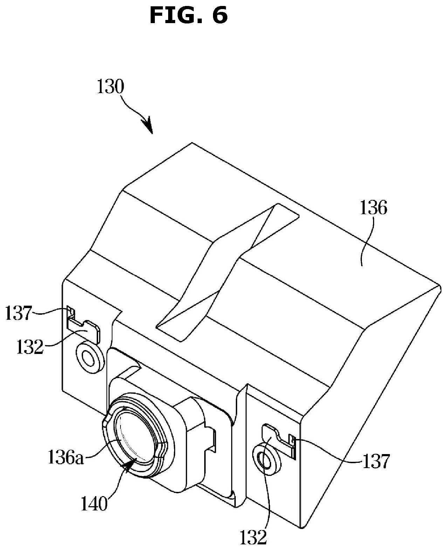

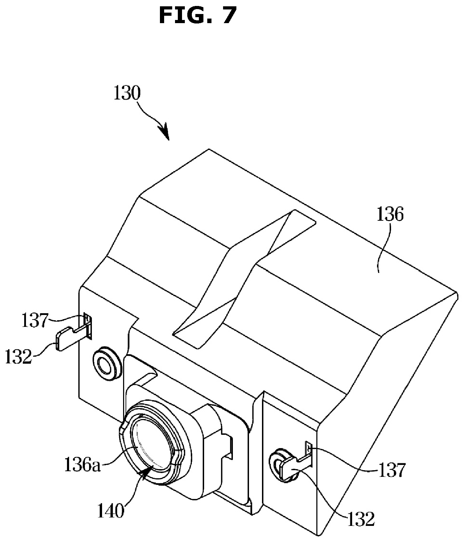

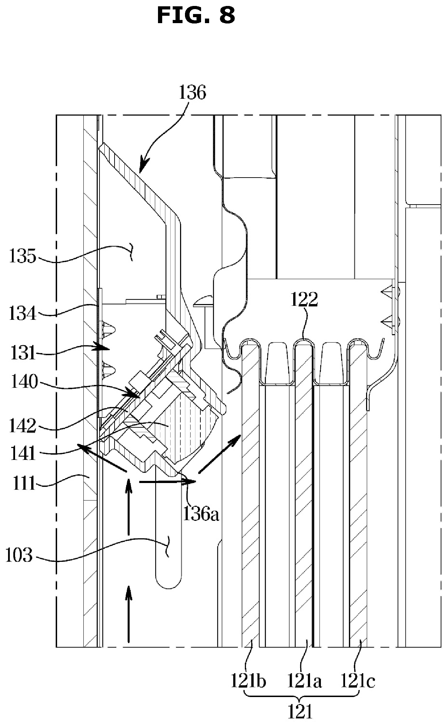

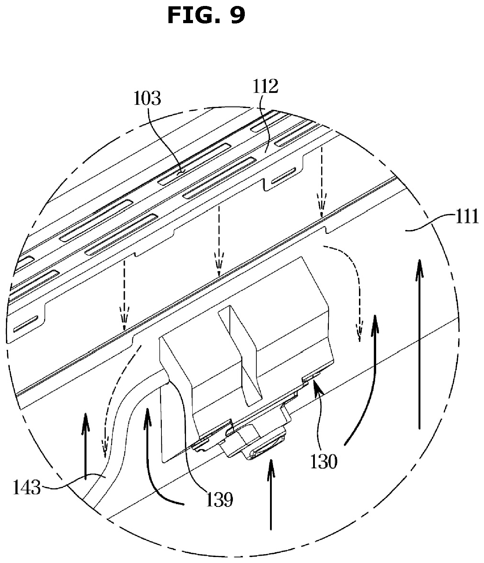

FIG. 3 is an exploded view showing of the door according to an embodiment of the present disclosure. FIG. 4 is an exploded view of a camera device disassembled from an outer body of the door according to an embodiment of the present disclosure. FIG. 5 is an exploded view of the camera device according to an embodiment of the present disclosure. FIG. 6 is an exploded view of a camera holder of the camera device according to an embodiment of the present disclosure secured to a camera bracket. FIG. 7 is an exploded view of the camera holder of the camera device according to an embodiment of the present disclosure detachable from the camera bracket. FIG. 8 is an enlarged view of portion A shown in FIG. 2. FIG. 9 is an enlarged view of portion B shown in FIG. 3.

Referring to FIG. 3, the door 100 according to an embodiment of the present disclosure may include an outer body 110 and an inner body 120. The inner body 120 may be detachably coupled to the outer body 110.

The door 100 may include a door hinge 119. The door hinge 119 may rotatably support the door 100 relative to the main body 10. The door 100 may include a door damper 118 for supporting rotation of the door 100 while the door 100 is open. The door damper 118 may be configured to regulate the rotational speed at which the door 100 is opened during opening of the door 100.

The outer body 110 may include an outer glass 111 and an outer frame 112 for supporting the outer glass 111. The door handle 102 may be provided in the outer body 110. The outer glass 111 may include insulating glass. The outer frame 112 may include a material of a higher strength than the outer glass 111.

The outer glass 111 may include a viewing portion 111a for viewing the inside of the cooking chamber 40 from the outside of the cooking apparatus 1. When the door 100 closes the cooking chamber 40, a user may view the inside of the cooking chamber 40 through the viewing portion 111a. The outer glass 111 may include a blocking portion 111b provided in an area other than the viewing portion 111a.

The inner body 120 may include an inner glass 121 and an inner frame 122 for supporting the inner glass 121. For example, the inner glass 121 may be an insulating glass. In an example, the inner glass 121 may be made of glass with a heat-reflective coating. The inner glass 121 may be configured to block radiant heat from the inside of the cooking chamber 40. The inner frame 122 may include a material of a higher strength than the inner glass 121.

For example, the inner glass 121 may include a first inner glass 121a, a second inner glass 121b positioned closer to the outer glass 111 than the first inner glass 121a, and a third inner glass 121c positioned closer to the cooking chamber 40 than the first inner glass 121a.

The cooking apparatus 1 according to an embodiment of the present disclosure may include a camera device 130 for capturing the inside of the cooking chamber 40. The camera device 130 may be provided to monitor the interior of the cooking chamber 40.

The camera device 130 may be located in the inside of the door 100. For example, the camera device 130 may be positioned between the outer body 110 and the inner body 120. For example, the camera device 130 may be disposed between the outer glass 111 and the inner glass 121. The camera device 130 may be mounted to the outer glass 111. The camera device 130 may be mounted on the blocking portion 111b of the outer glass 111.

The cooking apparatus 1 according to an embodiment of the present disclosure may reduce damage caused by heat generated from the cooktop 10a disposed on the upper side of the cooking chamber 40, since the camera device 130 is disposed within the door 100.

The camera device 130 may include a camera bracket 131 arranged to be mounted on the outer body 110. For example, the camera bracket 131 may be secured to the outer glass 111. In an example, the camera bracket 131 may be attached to the outer glass 111 by an adhesive member 134, such as silicone and/or tape. For example, the camera bracket 131 may be configured to include a metallic material.

The camera device 130 may include a camera holder 136 detachably mountable to the camera bracket 131. For example, the camera holder 136 may be configured to include a material having a higher heat-resistant temperature than the camera bracket 131. For example, the camera holder 136 may include polybutylene terephthalate (PBT). The camera holder 136 may be configured such that, when mounted to the camera bracket 131, an open side is covered by the outer glass 111.

The camera device 130 may include a camera 140 for taking images of the interior of the cooking chamber 40. The camera 140 may include an imaging portion 141 and a camera substrate 142. The camera 140 may be mounted on the camera holder 136. Based on the camera device 130 mounted on the door 100, the camera 140 may be arranged such that the imaging portion 141 faces the cooking chamber 40. The camera 140 may be arranged on the upper side of the viewing portion 111a to be able to take pictures of the entire food prepared in the cooking chamber 40.

Based on the camera holder 136 mounted on the camera bracket 131, the camera holder 136, the camera bracket 131, and the outer glass 111 may be configured to enclose the camera 140. Based on the camera holder 136 and the camera bracket 131 being coupled, the camera holder 136, the camera bracket 131, and the outer glass 111 may form a receiving space 135 for receiving the camera 140.

The camera 140 may be electrically connected to a controller of the cooking apparatus 1 by a camera wire 143. Because the camera 140 is connected to the controller of the cooking apparatus 1 by the camera wire 143, the camera 140 may transmit the captured image information to the controller and receive a control command from the controller. For example, the cooking apparatus 1 may be configured to communicate with an external device so that the external device may view the interior of the cooking chamber 40 captured by the camera 140.

For example, the camera 140 may include a communication board that may transmit captured information to an external device and receive information from the external device. The communication board may transmit image information or video information of the inside of the cooking chamber 40 captured by the camera 140 to the external device. The communication board may transmit information generated from the external device and receive information from the external device via various communication methods.

For example, wireless signals may be transmitted and received via communication methods, such as third generation (3G), fourth generation (4G), and the like, and in addition, information may be transmitted and received within a predetermined distance via communication methods, such as wireless local area network (LAN), wireless fidelity (Wi-Fi), Bluetooth, Zigbee, Wi-Fi direct (WFD), ultra wideband (UWB), infrared data association (IrDA), Bluetooth low energy (BLE), near field communication (NFC), and the like.

The camera holder 136 may include a wire opening 139 through which the camera wire 143 extending from the camera 140 may pass. The wire opening 139 may be formed to communicate an interior space of the camera device 130 with an exterior space when the camera device 130 is mounted on the door 100.

The wire opening 139 may be arranged to face one side of the camera device 130. For example, the wire opening 139 may be formed to face a direction different from the direction of gravity when the camera holder 136 is mounted on the camera bracket 131. For example, the wire opening 139 may be arranged to face the right or left side when the camera holder 136 is mounted on the camera bracket 131. The wire opening 139 may be arranged to face one side of the camera device 130 so as to prevent water entering the inside of the door 100 from entering the inside of the camera device 130. In an example, the wire opening 139 may be positioned to be spaced apart from the camera 140. For example, the wire opening 139 may be positioned so as to be spaced from the camera 140 on a different side from the side on which the camera 140 of the camera holder 136 is mounted.

The camera holder 136 may include a camera opening 136a that is open for the camera 140 to acquire images of the cooking chamber 40. The camera opening 136a may be configured such that a portion of the imaging portion 141 of the camera 140 is exposed to the outside of the camera device 130. The camera opening 136a may be arranged to open toward the cooking chamber 40 when the camera holder 136 is mounted on the camera bracket 131.

Referring to FIGS. 5 to 7, the camera holder 136 may include a holder coupling portion 137. The camera bracket 131 may include a bracket fixing portion 132 coupleable to the holder coupling portion 137. The bracket fixing portion 132 may be configured to be deformable. As shown in FIG. 7, when the bracket fixing portion 132 is coupled to the holder coupling portion 137, the camera holder 136 may be attached to the camera bracket 131 as the bracket fixing portion 132 is deformed. As shown in FIG. 6, the bracket fixing portion 132 may be bent while being inserted into the holder coupling portion 137 to secure the camera holder 136 to the camera bracket 131.

In an example, the holder coupling portion 137 may have a hole shape through which the bracket fixing portion 132 may pass, and the bracket fixing portion 132 may have a rib or protrusion shape through which the holder coupling portion 137 may pass. The bracket fixing portion 132 is a portion of the camera bracket 131 and may have a thickness that allows it to be bent.

As shown in FIG. 6, with the camera holder 136 mounted on the camera bracket 131, the camera holder 136 may be separable from the camera bracket 131 by deforming the bracket fixing portion 132 to a state where the bracket fixing portion 132 may pass through the holder coupling portion 137. As shown in FIG. 7, the bracket fixing portion 132 may be unfolded to a state where it may be separated from the holder coupling portion 137, and thus, the camera holder 136 may be separated from the camera bracket 131. The camera holder 136 may be arranged to be removed from the camera bracket 131 when attached to the camera bracket 131, as the bracket fixing portion 132 is deformed and separated from the holder coupling portion 137.

The camera bracket 131 may include a bracket alignment portion 133. The camera holder 136 may include a holder alignment portion 138 configured to be guided by the bracket alignment portion 133 while being mounted on the camera bracket 131. In an example, the holder alignment portion 138 may have a protrusion shape, and the bracket alignment portion 133 may have a hole shape into which the holder alignment portion 138 may be inserted.

Referring to FIGS. 8 and 9, heat transferred from the cooking chamber 40 to the inside of the door 100 may be transferred to the camera device 130. Since the camera 140 is configured to be covered by the camera holder 136, the camera 140 may be protected from heat transferred to the inside of the door 100. The camera holder 136 may protect the camera 140 from heat. The camera holder 136 may be configured to include a material having a relatively high heat resistance temperature, and thus the cooking apparatus 1 according to an embodiment of the present disclosure may reduce heat transferred from the inside of the door 100 to the inside of the camera device 130. Heat transferred to the inside of the door 100 may be discharged to the outside of the door 100 through the door opening 103.

Referring to FIG. 9, when water flows into the inside of the door 100 through the door opening 103, the camera holder 136 may protect the camera 140 from the water. Because the wire opening 139 provided in the camera holder 136 may be formed to face a lateral direction, water flowing into the inside of the door 100 may be prevented from flowing into the inside of the camera device 130 even though water flowing into the inside of the door 100 falls in the direction of gravity. Because the camera holder 136 is configured to protect the camera 140 from water flowing into the inside of the door 100, the cooking apparatus 1 according to an embodiment of the present disclosure may prevent the camera 140 from being damaged by water.

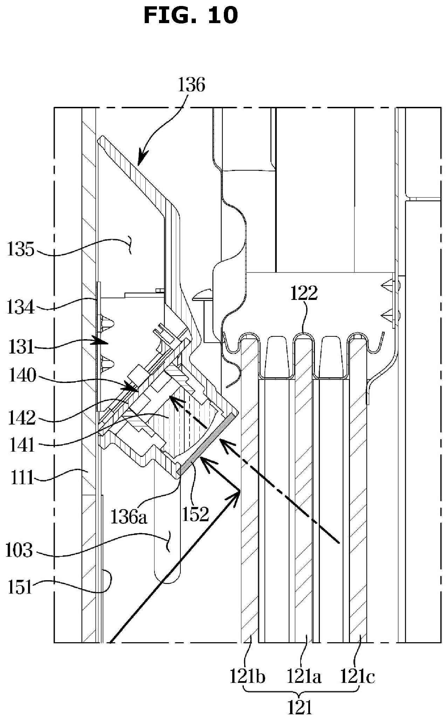

FIG. 10 is an enlarged view of a portion of the door in which the camera of the cooking apparatus according to an embodiment of the present disclosure is disposed.

While the camera 140 of the cooking apparatus 1 captures images of the inside of the cooking chamber 40, light from the outside of the cooking apparatus 1 may pass through the outer glass 111 and then be reflected by the inner glass 121 and incident on the camera 140. The image of the inside of the cooking chamber 40 captured by the camera 140 may be damaged by the light incident on the camera 140 from the outside of the cooking apparatus 1.

Referring to FIG. 10, the door 100 of the cooking apparatus 1 according to an embodiment of the present disclosure may further include polarizing members 151 and 152. The polarizing members 151 and 152 may include a first polarizing member 151 and a second polarizing member 152.

The camera 140 may be positioned between the outer glass 111 and the inner glass 121 of the door 100, the light from the outside of the cooking apparatus 1 may pass through the outer glass 111 and then, be reflected by the inner glass 121 and be incident on the camera 140. When the light from the outside of the cooking apparatus 1 is incident on the camera 140, the camera 140 may capture not only an image by the light from the inside of the cooking chamber 40, but also an image by the light from the outside of the cooking apparatus 1 reflected by the inner glass 121.

The first polarizing member 151 and the second polarizing member 152 may prevent images caused by the light from the outside of the cooking apparatus 1 from being captured by the camera 140.

The first polarizing member 151 may be provided on the outer body 110. For example, the first polarizing member 151 may be located on a rear surface of the outer glass 111. The first polarizing member 151 may be configured to transmit light oscillating in a first direction. The first polarizing member 151 may be configured to absorb or reflect light oscillating in a second direction different from the first direction. In an example, the first polarizing member 151 may include a polarizing film.

The second polarizing member 152 may be disposed on a side of the camera 140 facing the cooking chamber 40. The second polarizing member 152 may be positioned in the camera opening 136a of the camera holder 136.

The second polarizing member 152 may be configured to transmit light oscillating in the second direction different from the first direction. For example, the second direction may be arranged in a direction perpendicular to the first direction.

The second polarizing member 152 may be configured to absorb or reflect light oscillating in the first direction transmitted by the first polarizing member 151. The second polarizing member 152 may be configured to block a portion of the light incident on the camera 140. In an example, the second polarizing member 152 may include a linear polarizing plate. For example, the second polarizing member 152 may include a polarizer provided by printing a polarizing film onto the glass. The second polarizing member 152 may be configured to allow light transmitted through the inner glass 121 from the inside of the cooking chamber 40 to pass through, and may be configured to prevent light transmitted through the first polarizing member 151 from passing through.

With such a configuration, the cooking apparatus 1 according to an embodiment of the present disclosure may allow the light from the outside of the cooking apparatus 1 to be primarily polarized by the first polarizing member 151, and block the light that passes through the first polarizing member 151 and is then reflected by the inner glass 121 and incident on the camera 140 by being absorbed or reflected by the second polarizing member 151. As a result, the image of the inside of the cooking chamber 40 captured by the camera 140 may be prevented from being damaged by light from the outside.

In particular, as light from the outside of the cooking apparatus 1 passes through the first polarizing member 151, the light oscillating in the first direction may pass therethrough, while the light oscillating in the second direction may be absorbed or reflected, thereby having a polarity. Furthermore, the light that passes through the first polarizing member 151 and is then reflected by the inner glass 121 and incident on the camera 140, i.e., the light oscillating in the first direction, may pass through the second polarizing member 152 and be absorbed or reflected, so that the light from the outside of the cooking apparatus 1 may be blocked from being incident on the camera 140. In addition, the light from the inside of the cooking chamber 40 may pass through the inner glass 121, and then the light oscillating in the first direction may be absorbed or reflected by the second polarizing member 152, but the light oscillating in the second direction may pass through the second polarizing member 152. Accordingly, the light oscillating in the second direction of the light from the inside of the cooking chamber 40 may be incident on the camera 140.

Accordingly, the cooking apparatus 1 according to an embodiment of the present disclosure may block light from the outside of the cooking apparatus 1 from being incident on the camera 140, and may be arranged such that light from the inside of the cooking chamber 40 is incident on the camera 140, thereby preventing the image of the inside of the cooking chamber 40 from being damaged by light from the outside of the cooking apparatus 1.

In addition, the polarizing members 151 and 152 may be configured such that they do not affect the user's ability to see the inside of the cooking chamber 40 through the viewing portion 111a of the door 100 from the outside of the cooking apparatus 1. Accordingly, the cooking apparatus 1 according to an embodiment of the present disclosure may prevent the image of the inside of the cooking chamber 40 captured by the camera 140 from being damaged by light from the outside, and may not hinder the user to see the inside of the cooking chamber 40 through the viewing portion 111 a of the door 100.

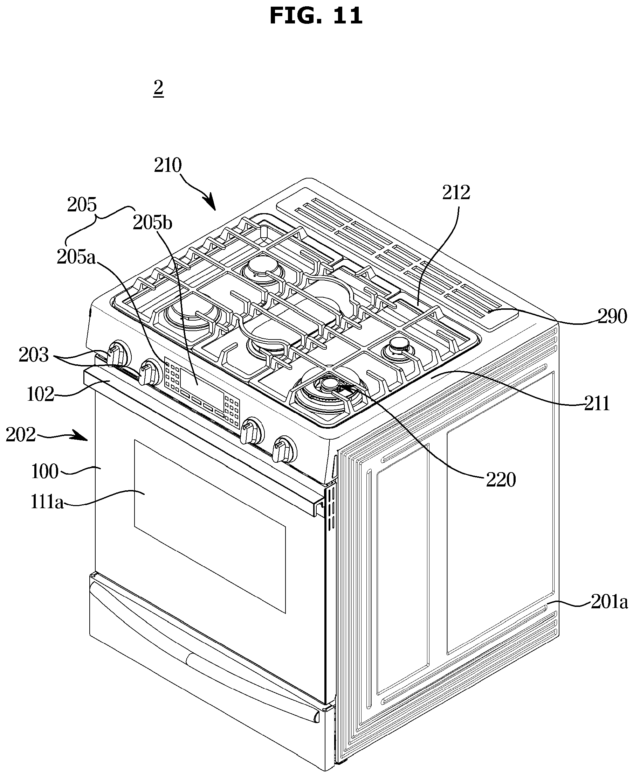

FIG. 11 shows a cooking apparatus according to an embodiment of the present disclosure.

Referring to FIG. 11, a cooking apparatus 2 according to an embodiment of the present disclosure may include an oven 202 main body 201a accommodating various components therein and a cooktop 210 for heating a cooking vessel containing food items. The cooktop 210 may be positioned on an upper portion of the cooking apparatus 2, and the oven 202 may be positioned on a lower portion thereof. A cooking chamber may be formed within the oven 202. Food items may be accommodated within the cooking chamber.

In FIG. 11, the cooking apparatus 2 is shown as including the cooktop 210 and the oven 202, but, alternatively, the cooking apparatus 2 may be configured to include only the oven 202. In other words, the cooking apparatus 2 may omit the cooktop 210. The cooking apparatus 2 may be provided as a built-in or non-built-in type.

The cooktop 210 may include a gas burner device 220 for heating food items. The gas burner device 220 may use gas as an energy source. The gas burner device 220 may generate heat by burning gas. In FIG. 11, the cooktop 210 is shown as including five gas burner devices 220, but the number of gas burner devices 220 is not limited thereto.

The cooktop 210 may include a support plate 211. The support plate 211 may form an upper surface of the cooking apparatus 2. The gas burner devices 220 may be mounted on the support plate 211.

A vessel support member 212 may be disposed on an upper portion of the support plate 211. The vessel support member 212 may be configured such that a cooking vessel (not shown) may be placed thereon. The vessel support member 212 may be arranged to be detachable from the support plate 211. The vessel support member 212 may be positioned on an upper side of the gas burner devices 220. The vessel support member 212 may be provided in a plurality.

The oven 202 may be disposed on a lower portion of the cooktop 210. A plurality of racks (not shown) may be provided within the oven 202, and each rack having a tray (not shown) supported thereon. The tray may receive food items to be cooked.

The oven 202 may include the door 100 to selectively open or close the front of the cooking chamber. The door 100 may include the viewing portion 111a, which is configured to include a transparent or translucent material to allow for the user to visually check the cooking state of the food accommodated in the cavity. The viewing portion 111a may be provided with multiple glass layers. The multiple glass layers may be arranged at predetermined intervals to allow air to pass through for cooling.

A knob 203 may be provided on a front upper portion of the cooking apparatus 2. The knob 203 may be provided to set functions of the cooktop 210 and/or the oven 202. The knobs 203 may be configured to operate respective gas burner devices 220. Based on the operation of the knob 203, the user may perform on/off setting, a temperature setting, a time setting, and the like. In FIG. 11, four knobs 203 are arranged, but the present disclosure is not limited thereto, and the number of knobs 203 may be varied. For example, the number of knobs 203 may be arranged to correspond to the number of gas burner devices 220. Each knob 203 may independently control a respective gas burner device 220.

In addition, a user interface 205 may be provided next to the knob 203 on the front upper portion of the cooking apparatus 2, and the user interface 205 may include a plurality of input interfaces 205a for receiving control commands from a user, and an output interface 205b for displaying operation information of the cooking apparatus 2.

Looking at the outside and inside of the cooking apparatus 2 in more detail, a cavity for accommodating food items is formed within the main body 201a. An open front of the cavity may be provided with the door 100 rotatably coupled to the main body 201a in the vertical direction, and the cavity may be opened and closed by the door 100. In addition, the door 100 may be provided with the handle 102 for a user to easily open or close the door 100. The main body 201a may be provided with an outlet 290 to discharge the waste gas from the cavity to the outside of the cooking apparatus 2.

To heat the food items accommodated in the cavity, the cooking apparatus 2 may include various components.

The door 100 of the cooking apparatus 2 according to an embodiment of the present disclosure may have the same configuration as the door 100 of the cooking apparatus 1 shown in FIG. 1. The cooking apparatus 2 according to an embodiment of the present disclosure may include the camera device 130 positioned on the door 100, thereby reducing damage to the camera 140 from heat generated by the cooktop 210.

The cooking apparatus according to the invention comprises the main body having the cooking chamber, the door mounted on the main body to open or close the cooking chamber, the door including the inner glass and the outer glass, the camera bracket attached to the outer glass between the outer glass and the inner glass, the camera holder detachably mounted to the camera bracket, the camera mounted on the camera holder to capture an inside of the cooking chamber, the first polarizing member provided on the outer glass to transmit light oscillating in the first direction, and the second polarizing member on a side of the camera facing the cooking chamber to absorb or reflect the light oscillating in the first direction transmitted by the first polarizing member and reflected by the inner glass.

The second polarizing member may be configured to transmit light oscillating in the second direction different from the first direction.

The camera may capture the inside of the cooking chamber as the second polarizing member absorbs or reflects the light oscillating in the first direction and transmits the light oscillating in the second direction from among light of the cooking chamber.

The camera holder may include a material having a higher heat resistance temperature than the camera bracket.

The camera holder and the outer glass may enclose the camera.

The camera holder may include the wire opening through which the camera wire extending from the camera passes.

The wire opening may face a direction different from a direction of gravity.

The wire opening may be positioned on a side of the camera holder different from a side on which the camera is mounted, so that the wire opening is spaced apart from the camera.

The camera holder may include the holder coupling portion. The camera bracket may include the bracket fixing portion coupleable to the holder coupling portion and configured to fix the camera holder to the camera bracket by deformation when coupled to the holder coupling portion.

The camera holder may be separable from the camera bracket in response to the bracket fixing portion being deformed and separated from the holder coupling portion.

The camera bracket may include the bracket alignment portion. The camera holder may include the holder alignment portion configured to be guided by the bracket alignment portion while the camera bracket is being mounted on the camera bracket.

The bracket alignment portion may have a hole shape. The holder alignment portion may have a protrusion shape insertable into the bracket alignment portion.

The camera bracket may include a metallic material and may be attached to the outer glass by the adhesive member.

The inner glass may include the first inner glass, the second inner glass disposed closer to the outer glass than the first inner glass, and the third inner glass disposed closer to the cooking chamber than the first inner glass.

The camera holder may include the camera opening through which the camera to capture the cooking chamber. The second polarizing member may be positioned in the camera opening.

A cooking apparatus according to the present disclosure may include the main body including the first cooking section and the second cooking section positioned below the first cooking section and having the cooking chamber 40, the door mountable on the main body to open or close the cooking chamber, the door including the inner glass and the outer glass, the camera disposed within the door to monitor an inside of the cooking chamber, the camera bracket attached to the outer glass between the outer glass and the inner glass, and the camera holder on which the camera is mounted, the camera holder being detachably mountable to the camera bracket. The camera may be configured to be enclosed by the outer glass and the camera holder when the camera holder is mounted on the camera bracket.

The camera holder may include a material having a higher heat resistance temperature than the camera bracket.

The camera holder may include the wire opening through which the camera wire extending from the camera passes.

The camera holder may include the holder coupling portion. The camera bracket may include the bracket fixing portion coupleable to the holder coupling portion and configured to fix the camera holder to the camera bracket by deformation when coupled to the holder coupling portion.

The camera bracket may include the bracket alignment portion. The camera holder may include the holder alignment portion configured to be guided by the bracket alignment portion while being mounted on the camera bracket.

According to various embodiments of the present disclosure, the cooking apparatus may include the camera disposed within the door and configured to be covered by the camera holder including the material having a high heat resistance temperature, so that the camera may be protected from heat generated from the cooktop and/or heat within the cooking chamber.

According to various embodiments of the present disclosure, the cooking apparatus may include the camera disposed to be enclosed by the camera holder, so that the camera may be protected from water.

According to various embodiments of the present disclosure, the cooking apparatus may include the camera holder detachably mountable on the camera bracket, so that the camera may be easily maintained and/or repaired.

According to various embodiments of the present disclosure, the cooking apparatus may include the first polarizing member and the second polarizing member disposed on the door, so that the inside of the cooking chamber may not be obstructed through the door and damage to the image captured by the camera may be reduced.

The effects of the present disclosure are not limited to those mentioned above, and other effects not mentioned will be apparent to those of skilled in the art from the following description.

While the present disclosure has been particularly described with reference to exemplary embodiments, it should be understood by those of skilled in the art that various changes in form and details may be made without departing from the spirit and scope of the present disclosure.

## Claims

1. A cooking apparatus comprising:
a main body including a cooking chamber;
a door mounted on the main body to open or close the cooking chamber, the door including an inner glass and an outer glass;
a camera bracket attached to the outer glass between the outer glass and the inner glass;
a camera holder detachably mounted to the camera bracket;
a camera mounted on the camera holder to capture an inside of the cooking chamber;
a first polarizing member on the outer glass, the first polarizing member configured to transmit light oscillating in a first direction from among light incident on the first polarizing member; and
a second polarizing member on a side of the camera facing the cooking chamber, the second polarizing member configured to absorb or reflect the light oscillating in the first direction transmitted by the first polarizing member and reflected by the inner glass.

2. The cooking apparatus of claim 1, wherein
the second polarizing member is configured to transmit light oscillating in a second direction different from the first direction.

3. The cooking apparatus of claim 2, wherein
the camera is configured to capture the inside of the cooking chamber as the second polarizing member absorbs or reflects the light oscillating in the first direction and transmits the light oscillating in the second direction from among light of the cooking chamber.

4. The cooking apparatus of claim 1, wherein
the camera holder includes a material having a higher heat resistance temperature than the camera bracket.

5. The cooking apparatus of claim 1, wherein
the camera holder and the outer glass are configured to enclose the camera.

6. The cooking apparatus of claim 1, wherein
the camera holder includes a wire opening through which a camera wire extending from the camera passes.

7. The cooking apparatus of claim 6, wherein
the wire opening faces a direction different from a direction of gravity.

8. The cooking apparatus of claim 6, wherein
the wire opening is positioned on a side of the camera holder different from a side on which the camera is mounted, so that the wire opening is spaced apart from the camera.

9. The cooking apparatus of claim 1, wherein
the camera holder includes a holder coupling portion, and
the camera bracket includes a bracket fixing portion coupleable to the holder coupling portion and configured to fix the camera holder to the camera bracket by being deformed when coupled to the holder coupling portion.

10. The cooking apparatus of claim 9, wherein
the camera holder is configured to be separable from the camera bracket in response to the bracket fixing portion being deformed and separated from the holder coupling portion.

11. The cooking apparatus of claim 1, wherein
the camera bracket includes a bracket alignment portion, and
the camera holder includes a holder alignment portion configured to be guided by the bracket alignment portion while the camera holder is being mounted on the camera bracket.

12. The cooking apparatus of claim 11, wherein
the bracket alignment portion has a hole shape, and
the holder alignment portion has a protrusion shape insertable into the bracket alignment portion.

13. The cooking apparatus of claim 1, wherein
the camera bracket includes a metallic material, and is attached to the outer glass by an adhesive member.

14. The cooking apparatus of claim 1, wherein
the inner glass includes:
a first inner glass,
a second inner glass disposed closer to the outer glass than the first inner glass, and
a third inner glass disposed closer to the cooking chamber than the first inner glass.

15. The cooking apparatus of claim 1, wherein
the camera holder includes a camera opening through which the camera captures the cooking chamber, and
the second polarizing member is positioned in the camera opening.
